# EUROPEAN PATENT APPLICATION

(11) **EP 1 764 166 A1**
(43) Date of publication of application: **21.03.2007**
(21) Application number: 05020194.6
(22) Date of filing: 16.09.2005
(51) Int. Cl.: B09B 3/00, B03B 9/06, B29B 17/02, C02F 9/00, E04B 1/74

(54) **Apparatus and process for recovering and washing waste materials of various kinds for obtaining ground insulating materials**

(71) Applicant: Fregonese, Sergio, 31045 Motta di Livenza (IT); Pelusi, Claudio, Campegine, RE (IT)
(72) Inventor: Pelusi, Claudio, 42100 Campegine RE (IT); Fregonese, Sergio, 31045 Motta di Livenza TV (IT)
(74) Representative: Dalla Rosa, Adriano

(57) **Abstract**

The present invention relates to an apparatus and process for recovering and washing waste insulating materials of various kind in view of obtaining ground insulating materials capable of being recycled for reuse in different applications, wherein the apparatus comprises a first apparatus section (5,6,7), in which said waste insulating materials are recovered and appropriately treated so as to produce ground waste materials that are duly cleaned, disinfected and sanitized; a second apparatus section (8,9,10), in which the liquids contained in the waste insulating materials are separated therefrom and the so separated liquids are properly cleaned, to remove soil and contaminants therefrom, and then disinfected and sanitized in view of using the so cleaned, disinfected and sanitized liquids in said first section of the apparatus; and a third apparatus section (115,116,117,121,122,124,126,127,132,136), in which the waste materials, as duly ground, washed, disinfected and sanitized, are finally stored in view of a subsequent re-utilization thereof and transportation to the places where they will be so re-used. The various component parts of the first, second and third sections of the apparatus are described along with the various steps of the process used to recover and wash the waste materials in the inventive apparatus.

## Description

The present invention refers to an apparatus and a process for recovering and washing waste insulating materials of various kind, such as in particular plastics, paper, cardboard and similar materials having heat and sound insulating properties, said apparatus and process being adapted to enable such waste insulating materials to be recovered and washed, and then separated from the liquids contained therein, in view of obtaining ground insulating materials capable of being recycled for further re-utilization to different purposes in many different applications, in particular in heat and sound insulations of residential buildings.

Largely known in the art is the practice of using waste insulating materials of various kind and nature in producing heat and sound insulation materials for use in residential buildings, as generally applied on to both floors and walls of said buildings, such waste materials comprising generally plastics, paper, cardboard, packages, and the like, along with materials of other kinds having insulating properties, as appropriately mixed and ground into a reduced form.

It is the general object of the present invention to make use of waste insulating materials of various kind and nature as duly recovered by means of a particular recovery apparatus, and a related process to be carried out in such apparatus, in which said waste insulating materials are processed and treated so as to obtain duly cleaned and sanitized ground materials, i.e. ground materials that have been treated with appropriate substances adapted to kill and destroy bacterial florae, and separate the liquids contained in the same waste materials for re-use in the process, in view of enabling said waste insulating materials to be properly re-used to heat and sound insulation purposes not only in buildings, but also in other applications.

This recovery apparatus, along with the related recovery process, is made with the construction and functional characteristics as substantially recited in the appended claims and described with reference thereto.

The invention will anyway be more readily understood from the description that is given below with reference to the accompanying drawings, in which:
- Figure 1 is an overall schematical view of a first section of the recovery apparatus according to the present invention;
- Figure 2 is an overall schematical view of a second section of the recovery apparatus according to the present invention;
- Figure 3 is an overall schematical view of a third section of the recovery apparatus according to the present invention;
- Figure 4 is a side view of a component part of the first section of the apparatus illustrated in Figure 1;
- Figure 5 is a front elevational view of the component part of the apparatus illustrated in Figure 4;
- Figure 6 is a plan view of the component part of the apparatus illustrated in Figure 4;
- Figure 7 is a schematical side view of another component part of the first section of the apparatus illustrated in Figure 1;
- Figure 8 is a perspective schematical front view of the component part of the apparatus illustrated in Figure 7;
- Figure 9 is a front elevational view of yet another component part of the first section of the apparatus illustrated in Figure 1;
- Figure 10 is a side view of the component part of the apparatus illustrated in Figure 9;
- Figure 11 is a plan view of the component part of the apparatus illustrated in Figure 9;
- Figure 12 is a schematical side view of yet another component part of the first section of the apparatus illustrated in Figure 1;
- Figure 13 is a schematical front view of the component part of the apparatus illustrated in Figure 12;
- Figure 14 is a schematical plan view of the component part of the apparatus illustrated in Figure 12;
- Figures 15, 16 and 17 are schematical views of respective component parts of the second section of the apparatus illustrated in Figure 2.

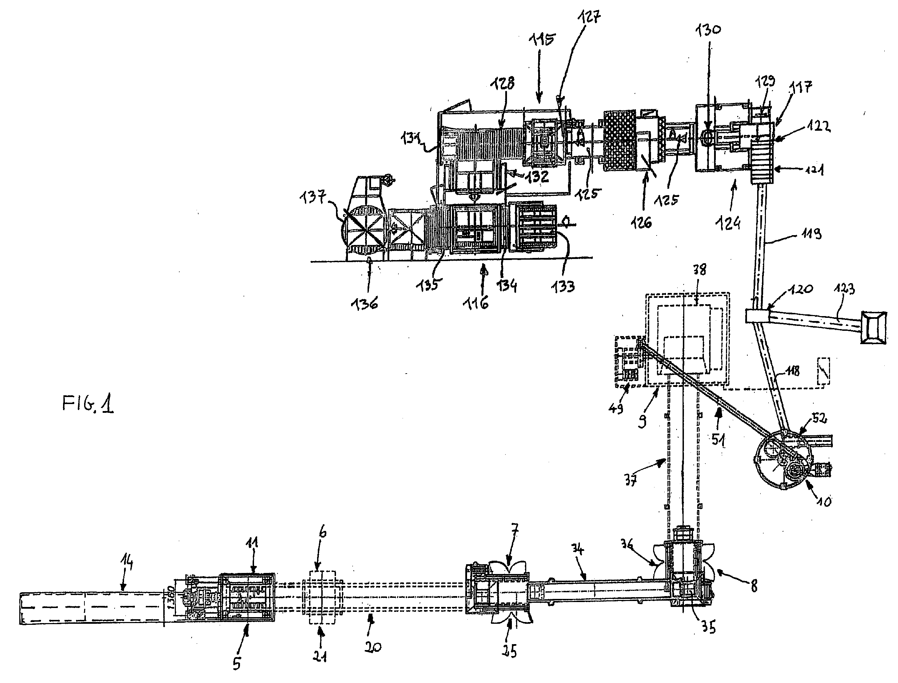

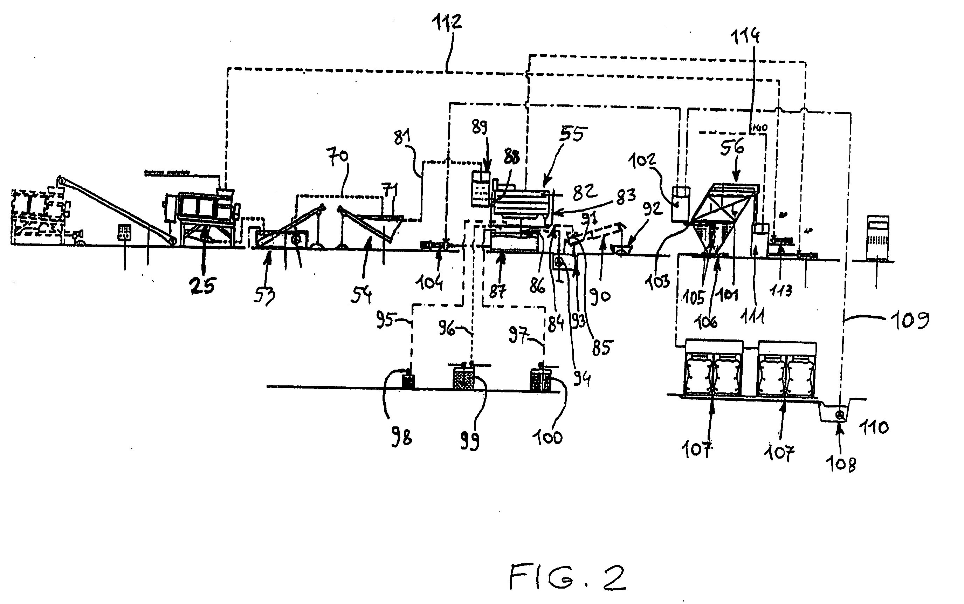

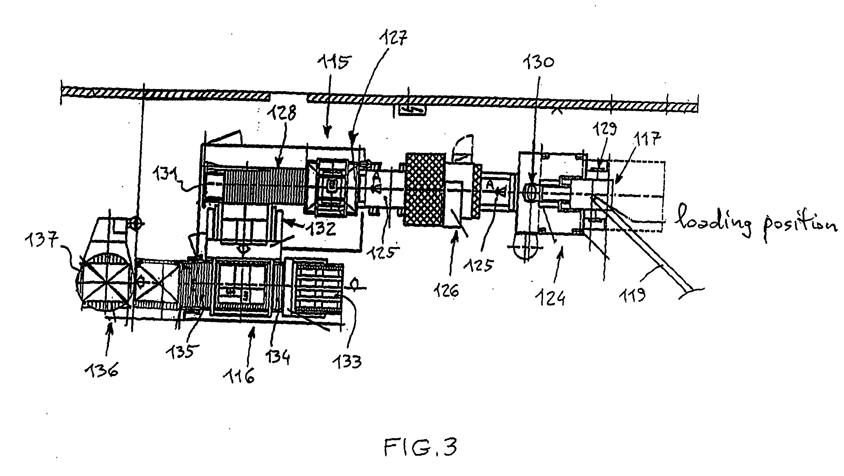

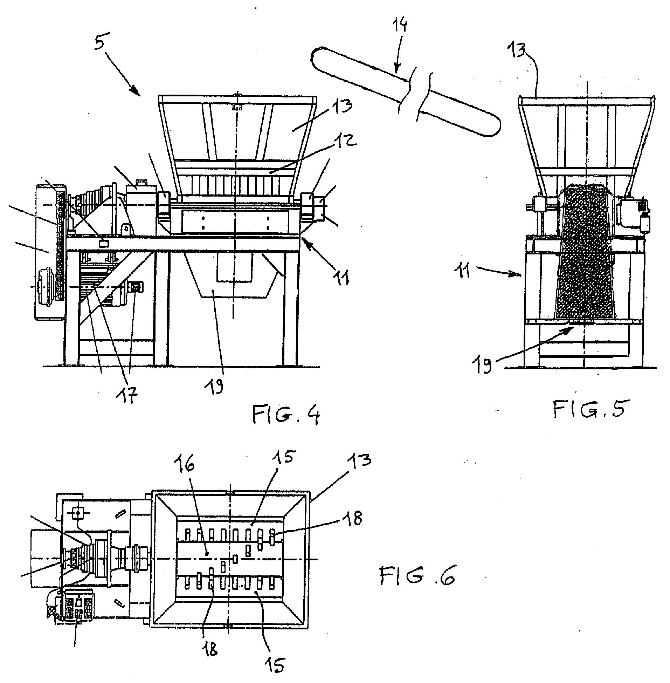

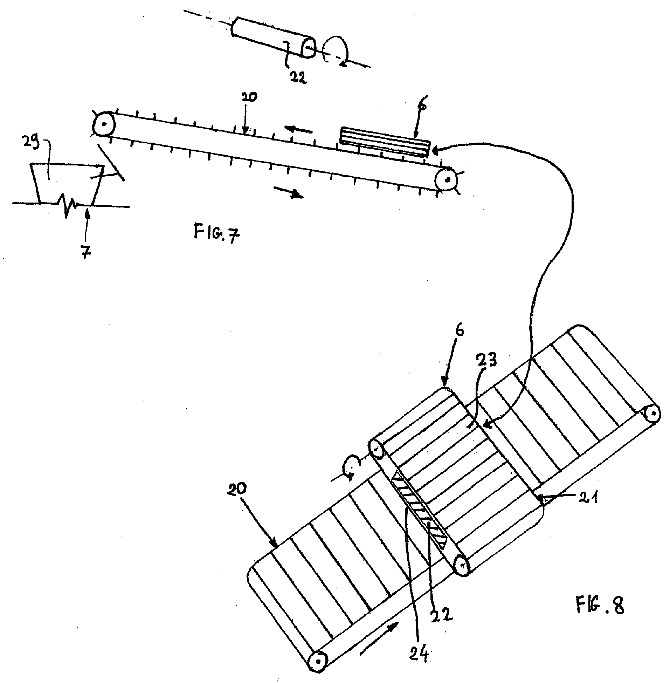

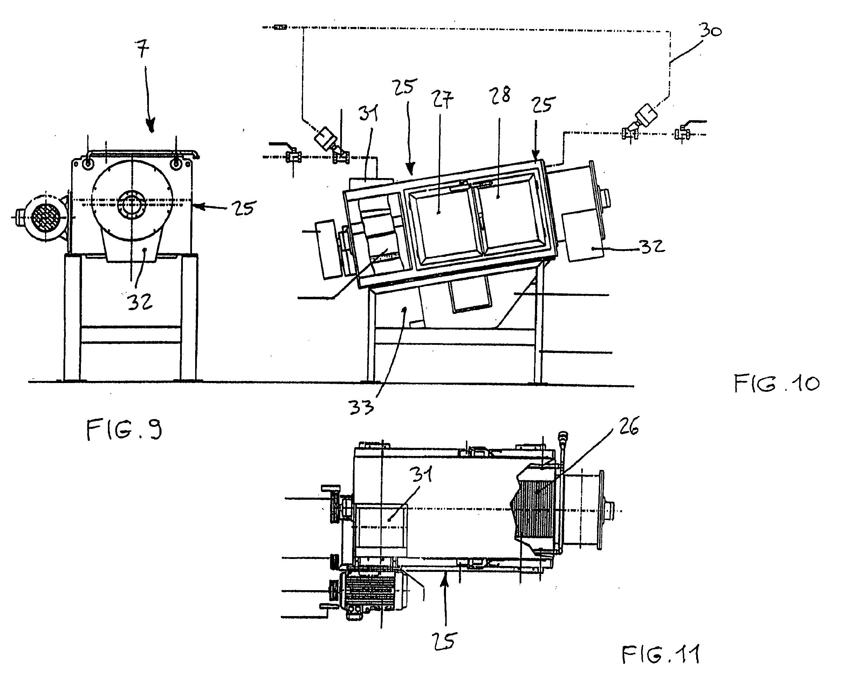

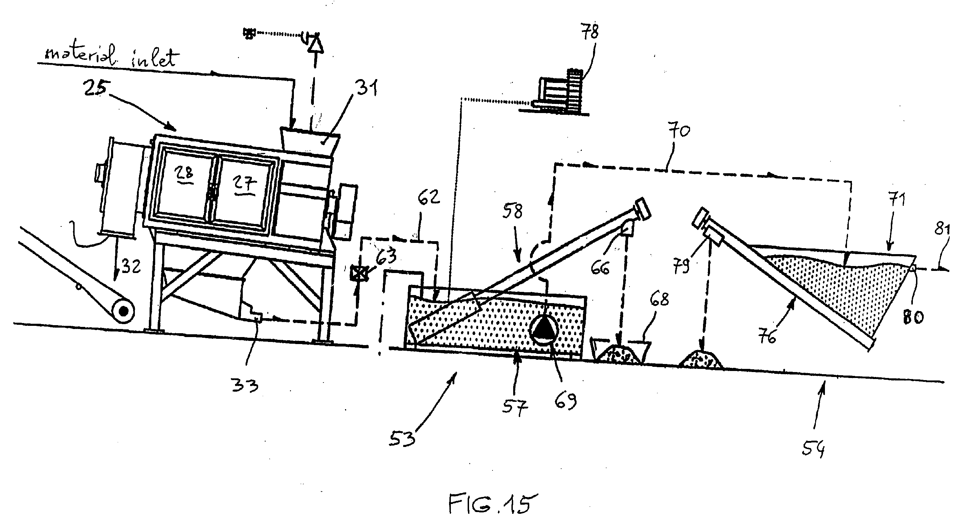

Illustrated schematically in the above-listed Figures is an apparatus according to the present invention for recovering and washing waste insulating materials of various kind and nature, and particularly waste plastics, paper, cardboard, packaging materials, and the like, having heat and sound insulating properties, adapted to enable such waste insulating materials to be recovered and washed, and then separated from the liquids contained therein, so as to ultimately obtain ground insulating materials capable of being recycled for re-use in different applications, such as particularly, although not solely, in applications where they perform as heat and sound insulation materials in residential buildings. As this is clearly to be seen in the illustrations appearing in these Figures, the inventive apparatus being considered is substantially comprised of a first apparatus section represented in Figures 1 and 4-11, arranged so as to recover and appropriately treat such waste insulating materials, as this shall be described in greater detail further on, a second apparatus section represented in Figures 2 and 12-14, arranged so as to separate the liquids contained in the waste insulating materials therefrom and clean the same liquids to remove dirt and contaminants therefrom, as this shall be described in greater detail further on, and a third apparatus section represented in Figure 3, arranged so as to appropriately store the so obtained ground waste materials in view of them being subsequently recycled for re-use.

Referring now in particular to Figure 1, it can be noticed that the first section of the apparatus according to the present invention is substantially comprised of loading and shredding means 5, in which waste material - as previously collected separately by firms specializing in collecting and recycling waste material in general - is introduced and shredded into thin, minute strips and fibres, separator means 6 to separate metal magnetic materials that may be contained in the shredded waste material, washing means 7 to properly wash the shredded waste material and separate the contaminant liquids contained in the same waste material, so that said liquids - as duly separated - can then be conveyed into the second section of the apparatus to be cleaned for re-use, washing and drying means 8 to handle the shredded and washed waste material, i.e. to separate the shredded and washed waste material from foreign solid substances and particles contained therein and dry it from the liquids used to wash it, grinding means 9 to grind and triturate the shredded, washed and dried waste material, so as to obtain particles of material having the desired size and shape, and storage means 10 to collect and temporarily hold all waste material being so treated, for it to be eventually transferred to the third section of the apparatus, in which the treated waste material is stored until it is eventually removed for re-use in the intended application.

Referring now to Figures 4 to 6, in which the loading and shredding means 5 are illustrated schematically, it can be noticed that these means are basically comprised of a metal casing 11 delimiting at least an internal shredding chamber 12 communicating with an upper loading hopper 13, into which the previously collected waste material is introduced. To that purpose, the waste material is first placed on the lower terminal zone of a continuously moving, inclined conveyor belt 14 to be thereby conveyed up to the upper terminal zone of the same conveyor belt, which is located above the hopper 13, and from which said waste material is ultimately cause to fall by gravity into the same hopper, thereby being ultimately introduced in the internal shredding chamber 12. This shredding chamber 12 is formed of planar, downwards inclined walls 15, within which there is housed at least a horizontal-axis revolving cylinder 16, which is rotatably driven in a continuous manner by a drive motor 17, and which is provided - along the circumference thereof - with cutting blades 18 appropriately spaced axially and at an angle relative to each other, and rotating close by, i.e. within a short distance from said planar inclined walls 15, thereby acting as shears so as to cause the waste material being let into the internal chamber to be finely shredded by the action of said cutting blades 18 and fall by gravity into the lower portion of the same chamber, where it is provided a sieve of a pre-established mesh size, which determines the maximum size of shredded material particles that are allowed to pass both therethrough and through a lower outlet 19 of the internal chamber 12 to fall again onto the lower terminal zone of a further continuously moving, inclined conveyor belt 20 provided therebelow and located close by the shredding means 5, so as to be able to convey the shredded and properly sieved waste material into the next station or section of the apparatus that shall be described in greater detail below.

Referring now to Figures 7 and 8, in which said further inclined conveyor belt 20 is illustrated schematically along with the separator means 6 provided to remove magnetic metal materials, it can be noticed that the upper terminal zone of said conveyor belt is situated in a position lying above the washing means 7, the construction of which will be described in greater detail further on, whereas the separator means 6 - which shall also be described in greater detail further on - are located in a position lying between such lower and upper terminal zones of the same conveyor belt, so that the shredded waste material being conveyed on said conveyor belt is enabled to first of all undergo the action of said separator means, with resulting removal from said shredded waste material of all magnetic metal particles that may be contained therein, and which are then duly disposed of, and be then further conveyed towards the upper terminal zone of said conveyor belt, from which they are eventually caused to fall by gravity into the washing means 7.

The above-cited separator means 6 are substantially comprised of a continuously moving conveyor belt 21, which is made of a magnetizable material and arranged to run in a parallel and transverse direction relative to the inclined conveyor belt 20, with a length that is greater than the width of said conveyor belt and slightly raised relative to the latter. They are further comprised of a cylinder 22 of a permanent magnetic material, which is arranged in a position lying between the upper planar section 23 and the lower planar section 24 of said magnetizable conveyor belt, close by said lower section of magnetizable conveyor belt, so as to allow a magnetic field to be only generated through said lower section of magnetizable conveyor belt, in which said magnetic field is of such an intensity and strength as to be able to attract the magnetic metal material contained in the shredded waste material being conveyed on the conveyor belt 20, thereby causing said magnetic metal material to move away and separate from said shredded waste material, wherein the so attracted magnetic metal material will then come off said lower section of conveyor belt in the zone of said magnetizable conveyor belt where the movement direction thereof is reversed, and where there is no magnetic field, to eventually fall into and be collected in appropriately provided bins (not shown).

Referring now to Figures 9 to 11, in which the washing means 7 are illustrated schematically, it can be noticed that they are substantially comprised of a water-operated centrifugal machine 25 having an inclined axis of rotation and containing an internal perforated rotating drum 26 that is rotatably driven at a spinning speed of approx. 1800 rpm and is provided with side lids 27 and 28 enabling access to be gained into the inner chamber thereof, in which there is held the waste material coming from the inclined conveyor belt 20 and let thereinto through a loading hopper 29 attached to the upper portion of the machine and arranged in a position coinciding with and slightly below the upper terminal zone of said conveyor belt, so as to be able to collect the waste material falling down from the same conveyor belt, and convey it into the inner chamber of the rotating drum 26. This centrifugal or spinning machine 25 is furthermore connected to water supply conduits 30, through which wash water, as duly mixed with appropriate biocide substances capable of destroying bacterial florae existing in the waste material, is caused to continuously circulate so as to bring about an effective washing and disinfecting action on said waste materials. Such biocide substances are mixed with the water in the second section of the apparatus, in the manner as shall be described further on, and preferably comprise quaternary ammonium and/or glutaraldehyde, or other suitable substances that are normally used to such purposes. The centrifugal machine being considered is provided with an upper opening 31 communicating with the loading hopper 29, so as to enable the waste material being let into the same hopper to enter the inner chamber of the rotating drum 26; it is further provided with a pair of lower outlet openings 32 and 33 intended to let out the waste material, as duly washed, disinfected and sanitized by the above-mentioned biocide substances, and the polluted washing liquids and contaminants separating from the mass of waste materials, respectively. It can therefore be readily appreciated that the waste material being introduced through the loading hopper 29 reaches continuously into the rotating drum 26 of the centrifugal machine, which is in turn continuously driven to rotate at a centrifugal, i.e. spinning speed, and that the mixture of water and biocide substances is at the same time let continuously into said drum, thereby wetting and soaking the mass of waste material being spun, thus causing the same waste material to be effectively washed, disinfected and sanitized. Rotating the drum at such spinning speed causes the waste material to be not only washed, disinfected and sanitized by the action of the in-flowing mixture of water and biocide substances, but also spin-extracted by the action of the high spinning rate, which the drum is driven to rotate at, so that the dirty and polluting liquids being extracted from the waste material are thrown centrifugally outwards and, by passing through the perforations in the peripheral wall of the drum, are conveyed into and through the lower outlet opening 33, from which they are then taken and caused to circulate through a series of conduits (not shown) connected to such opening, to be conveyed towards the component parts of the second section of the apparatus, which - as this shall be duly described and explained further on - are specially provided to clean said liquids, in view of having all solid and liquid dirt and contaminants contained in said liquids duly separated therefrom and the same liquids recovered, so that they can be recycled for re-use in the same apparatus. The washed, disinfected and sanitized waste material coming out through the lower outlet opening 32 is in turn transferred by gravity towards the lower terminal zone of a further inclined conveyor belt 34 arranged below said outlet opening 32, in a position coinciding therewith, the upper terminal zone of such conveyor belt ending above the loading hopper 35 of the subsequent washing and drying means 8, in a position coinciding with said hopper, so as to let such washed, disinfected and sanitized waste material into said subsequent washing and drying means.

In particular, these further washing and drying means 8 are comprised of a further centrifugal machine 36 of the same kind as the previously described one, which in this case is however no longer connected to conduits for the supply of water and biocide substances, but is again provided with a perforated rotating drum (not indicated) that is driven at a spinning speed of approx. 1800 rpm, in the internal chamber of which the waste material is introduced through the loading hopper 35 to the purpose of using the effect of the centrifugal action to cause on the one side said waste material to be on the one side spin-extracted and dried and, on the other side, solid foreign matters contained in the same waste material to be separated therefrom. In addition, this machine is also provided with two lower outlet openings (not visible) to let out the almost dry waste material, upon completion of the related spin-extraction cycles performed over pre-set periods of time, and the solid foreign matters separated therefrom, respectively, wherein such dried waste material are then transferred towards the lower terminal zone of a next continuously moving, inclined conveyor belt 37 that is arranged below the related outlet opening in correspondence thereto, whereas the upper terminal zone of this conveyor is led through the subsequent grinding means 9, so as to introduce said dry waste material carried by the inclined conveyor belt 37 in said grinding means, whereas the solid foreign matters separated therefrom are in turn caused to circulate through proper conduits (not shown) and eventually discharged outside.

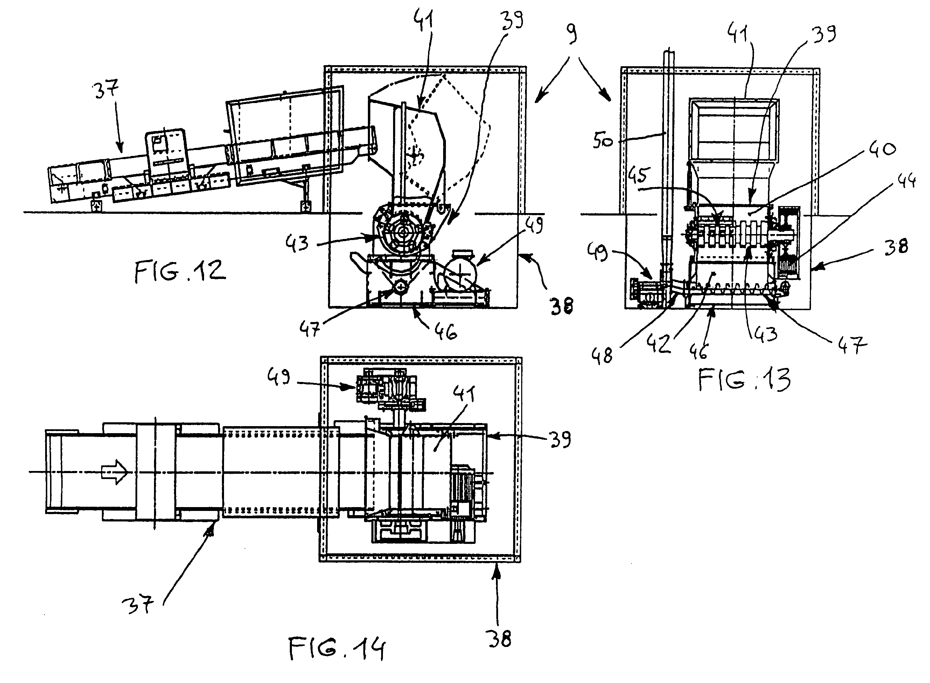

With reference to Figures 12 to 14, a description will now follow of the above-mentioned grinding means 9, which can be noticed to essentially comprise a grinding mill 38 of a traditional kind, formed of a large-size metal casing 39 delimiting at least an internal grinding chamber 40 that communicates with both an upper loading hopper 41 and a lower collecting chamber 42, wherein the hopper 41 is intended for the introduction of the washed and dried waste material that is laid onto the lower terminal zone of the inclined conveyor belt 37 and transported up to the upper terminal zone of said conveyor belt, from which they are then let by gravity into said hopper, thereby entering the grinding chamber 40. In this grinding chamber 40 there is provided at least a horizontal-axis rotor 43 that is continuously driven rotatably by a drive motor 44 and carrying a set of cutting blades 45, between which the waste material introduced through the hopper 41 is caused to pass, so that said waste material is ground into granular particles, the maximum allowable particle size of which being determined by an associated sieve arranged therebelow (not shown). The rotor 43 is in turn cooled by water circulating through a specially provided water-carrying circuit (not shown) that is incorporated in this internal grinding chamber 40, thereby keeping the waste material being ground at a constant temperature that is lower than the melting temperature of the same waste materials, so as to prevent the mass of waste material being ground from undesirably melting. Furthermore, the lower collecting chamber 42 is provided inside an unloading hopper 46, in which there is accommodated a continuously revolving rotary screw feeder 47, situated in a position below the rotor 43 and provided with suitably downward inclined walls and a side or bottom outlet opening 48 for the ground waste material falling down from the rotor 43 to be able to exit therethrough, said screw feeder being driven to rotate in a single direction, so as to enable it to convey the ground waste material falling onto it towards said outlet opening. This outlet opening 48 is furthermore connected to an aspirator 49 connected to a portion of vertical conduit 50 that extends with a portion of horizontal conduit 51 connecting with the upper part of the storage means 10, which are provided in the form of a large-capacity vertical silo 52, to the purpose of aspirating the ground waste material collecting into the collecting chamber 42 of the mill 38 and conveying it via said conduits into the silo 52, in which said ground waste material is introduced and kept stored, ready for use when needed, in which case the same material is transferred towards the third section of the apparatus, in the manner and to the purposes as this will be described below.

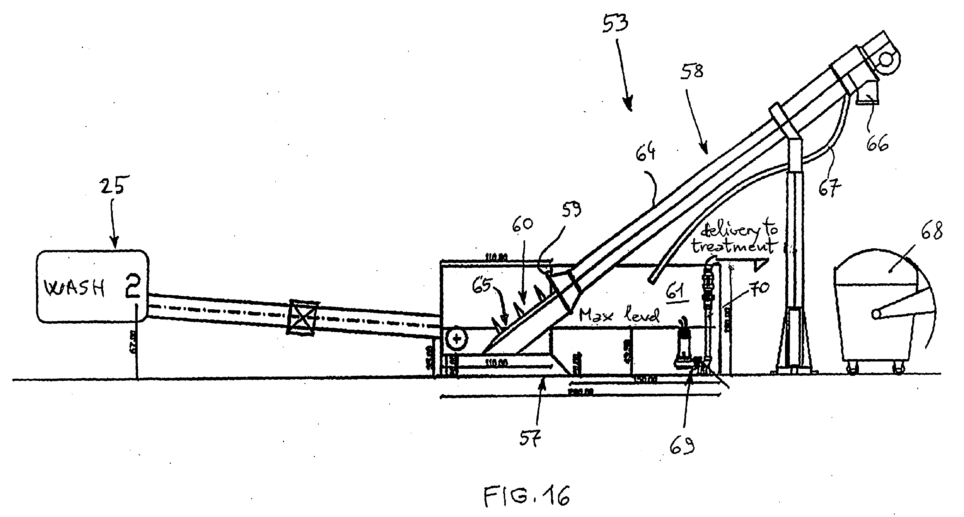

Referring now in particular to Figure 2, in which the second section of the apparatus according to the present invention is illustrated, and to Figures 15, 16 and 17, in which some component parts of this second section of the inventive apparatus are illustrated, it can be noticed that this second section of the apparatus is substantially comprised of a first component part 53 and a second component part 54, whose construction and operation shall be described in greater detail further on, and which are arranged in a sequence relative to each other so as to be able to purify - in successive steps - the soiled and polluting liquids flowing in from the centrifugal machine 36, in view of obtaining dried solid waste substances, which are directly discharged and disposed of, and liquids that are further purified in successive steps for them to be capable of being re-used in the apparatus. In addition, it further includes filtering means 55 and settling means 56 provided to further purify the liquids that have already undergone a first purifying stage through said first and said second component part 53 and 54, thereby separating dried solid waste substances (sand, mud, sludge and the like) from said liquids and obtaining clean liquids that are re-used by letting them again into the centrifugal machine 25, whereas the separated solid waste substances are again duly disposed of. Figure 16 more clearly illustrates the first component part 53, which is substantially comprised of an elongated collecting tank 57 extending horizontally, as well as an inclined conveyor device 58 that is led with the lower end portion thereof into said tank, as this shall be described in greater detail further on, said tank being in turn subdivided by a vertical partition wall 59 into a first tank portion 60 and a second tank portion 61 separated from the first one, these portions being provided to the purposes that shall be described further on. In particular, the first tank portion 60 is provided with a smaller capacity than the second tank portion 61 and communicates, via a conduit 62 and a pump 63, with the lower outlet opening 33 of the centrifugal machine, in such a manner as to enable the soiled and polluting liquids flowing from the centrifugal machine 25 to be collected, as conveyed there by the suction action of said pump, into said tank portion 60. The inclined conveyor device 58 is in turn comprised of an inclined hollow conduit 64 and a revolving screw feeder 65, or similar conveying means, housed within said hollow conduit and submerged with the lower end portion thereof in the soiled and polluting liquids collected in the first tank portion 60. In the upper end portion of said inclined hollow conduit 64 there is arranged internally an abutment wall (not shown), situated close by the revolving screw feeder 65, and there are further connected below an outlet conduit 66 and a conveying conduit 67 communicating on one side with the inner cavity of the inclined conduit 64 and, on the opposite side, with a collecting vessel 68 situated therebelow, such as for instance a bin or skip, and the second tank portion 61, respectively. In this way, the continuous rotation of the screw feeder 65 brings about a suction effect to draw in the soiled and polluting liquids introduced and contained in the first tank portion 60 and carry them, via the inner chamber of the inclined hollow conduit 64, up to the upper end portion of said conduit, in which said liquids strike and are thereby compressed against the abutment wall provided in the same conduit, i.e. a circumstance in which from said liquids there are separated the solid waste substances to be disposed of, which are in turn appropriately squeezed, compacted and spin-extracted against said abutment wall, thereby separating them from the liquid substances, in such a manner as to enable said dried solid waste substances to be then conveyed through the outlet conduit 66 and discharged into the collecting bin 68 for final disposal, whereas the extracted liquid substances are on the contrary conveyed through the conveyance conduit 67 into the second tank portion 61, from which another pump 69, which is provided submerged in the liquids so collecting in this tank portion (see also Figure 16), will then draw in said liquids and send them through a conduit 70, connected to said tank portion, towards the subsequent second component part 54, which shall be described in greater detail further on, while also ensuring that the liquid contained in said tank portion is able to just reach up to a maximum allowable level, so as to prevent the liquids themselves to possibly overflow and leak outside.

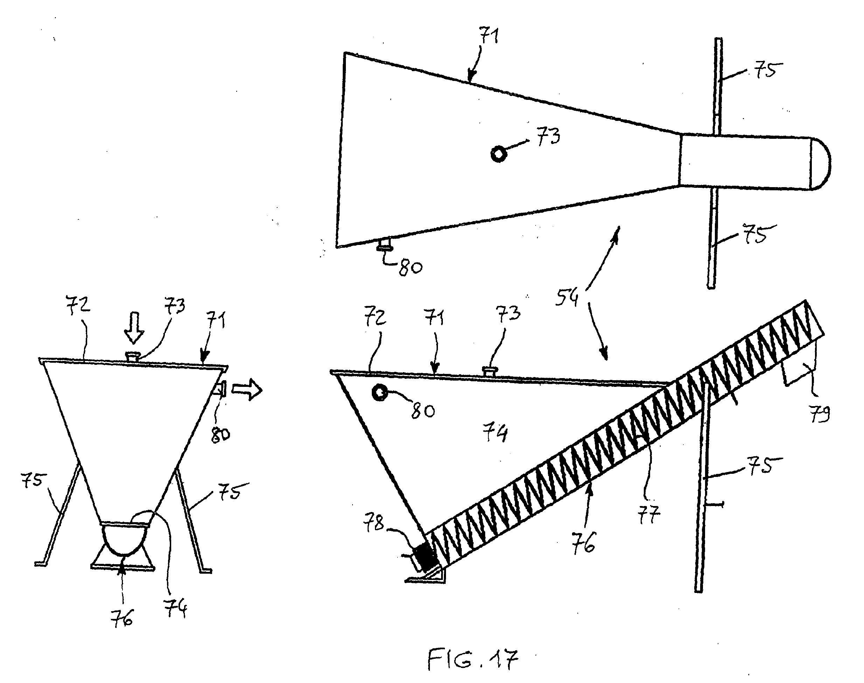

Illustrated in Figure 17 is a detailed representation of the above-mentioned second component part 54, which is substantially comprised of a loading hopper 71 in a roughly trapezoidal shape, and with an adequately large containment volume, which is closed by an upper wall 72 provided with a conduit portion 73 that connects to said conduit 70, is delimited downwards by a perforated inclined bottom 74, and is sustained on the ground by supporting legs 75. This second component part further includes an inclined hollow conduit 76 attached on the outside against said perforated inclined bottom all along the length thereof, and protruding beyond said bottom, in which this conduit is further perforated along the region thereof that is in contact with said bottom and accommodates in its interior a rotary screw feeder 77 - or any other equally effective forward-moving device - that is driven into continuous rotation by a gear-motor 78, and in which this conduit is provided at the upper end portion thereof with an unloading conduit 79 communicating with the internal cavity thereof. In this way, the soiled and polluting liquid substances contained in the second tank portion 61 are drawn in by the pump 69 and conveyed through the conduit 70 into the collecting chamber of the loading hopper 71, where the heavier solid particles in said substances (eg., sand, mud, and the like) separate from the liquid portion of the same substances and settle by gravity onto the bottom 74 of the same hopper, from which they are then able to move into the internal cavity of the inclined conduit 76 by passing through the perforations in said bottom and said conduit, whereas the liquid portion of said soiled and polluting liquid substances remains in turn contained in the collecting chamber of the hopper 71. Under these conditions, the solid particles moving into said inclined conduit 76 are moved further on by the rotary screw feeder 77 towards the upper end portion of the same conduit, from which they are then caused to pass through the unloading conduit 79 to ultimately fall into a collecting bin provided therebelow (not shown) in view of the final disposal thereof. The collecting chamber of the hopper 71 is in turn provided with a further side conduit portion 80, connected to a further conduit 81 leading to the filtering arrangement 55, so as to convey the liquid portion contained in said collecting chamber towards such filtering arrangement. As this can be seen in Figure 2, the filtering arrangement 55 is substantially comprised of a perforated horizontal-axis rotating cylinder 82 provided with a fine-mesh filtering surface and housed in a support structure 83 resting on the ground, that is closed below and open on top. This cylinder is driven into continuous rotation by a drive motor of its own (not shown) and delimitates an inner chamber adapted to contain the liquid portion to be further purified, and flowing in from the loading hopper 71 as this shall be described in greater detail further on, so that the solid particles that may be still present in said liquid portion are separated therefrom by the rotation of said cylinder. The so separated particles remain in the inner chamber of said cylinder, from which they are then unloaded outside through a first unloading conduit 84 communicating with said inner chamber, and attached in the lower portion of the support structure 83, to ultimately fall into a collecting bin 85 provided therebelow, in a separate position relative to said first unloading conduit 84, whereas the filtered liquids passing through the filtering meshes of the cylinder are let outside through a second outlet conduit 86 that is again attached in the lower portion of the support structure 83, to ultimately fall into a large-capacity collecting tank 87 provided in a position below said second outlet conduit 86. In addition, the inner chamber of the rotating cylinder 82 communicates, via an inlet port 88 opening in the side of the support structure 83, with a separate large-capacity tank 89 acting as a temporary storage buffer, which is situated upstream of the same rotating cylinder and connects to the conduit 81 extending from the collecting chamber of the loading hopper 71 under interposition of an intake pump (not shown) that is adapted to draw in the liquid portion contained in said collecting chamber of the hopper and convey it into said separate tank 89, from which it is then caused - at desired moments with the aid of appropriate valve means (not shown) - to fall by gravity into said inner chamber of the rotating cylinder 82. The solid waste particles collecting in the inner chamber of the rotating cylinder 82 are scraped off the filtering surface of the same cylinder by an internal screw-shaped blade (non visible) moving close by said filtering surface so as to graze it, to be then let out through the above-described first unloading conduit 84. In addition, such removal of said solid particles adhering against the filtering surface is also facilitated by the use of the water contained in a separate water-carrying circuit (not shown), which is suitably sprayed at intervals against the same surface. This filtering arrangement 55 is furthermore associated to a further inclined hollow conduit 90, which is provided downstream of the first unloading conduit 84 of the rotating cylinder 82 and accommodates a rotary screw feeder 91 therewithin, said inclined conduit sustaining at the lower end portion thereof the afore-described collecting hopper 85, into which the solid waste particles falling from said first unloading conduit 84 are introduced to then enter the inner cavity of the inclined conduit 90 and be moved further on by the slowly rotating screw feeder 91 towards the upper end portion of the same conduit, in which these solid waste particles are squeezed, compacted and extracted against an abutment wall (not shown) provided in this zone of the inclined conduit 90. As in the afore-considered circumstance, even in this case this is effective in causing the compacted and dried solid waste particles to be separated, to be then unloaded downwards into a collecting bin 92 provided therebelow for final disposal, whereas the liquids - as separated from said solid waste particles - are conveyed, as in the previously considered case, into a suitably sized collecting vessel 93, from which they are then drawn in and conveyed - by a pump 94 submerged in the liquids contained in the same vessel - towards the afore-described collecting tank 87, where they mix up with the liquids let out into the same tank through the second outlet conduit 86 of the rotating cylinder 82. This collecting tank 87 is in turn connected - via respective conduits 95, 96, 97 - to corresponding reservoirs 98. 99, 100, which are provided to contain biocide substances, a polyelectrolyte and aluminium polychloride, respectively. In particular, the biocide substances are intended to destroy bacterial florae that are present in the waste materials being processed in the apparatus. Whereas the polyelectrolyte is intended to cause sludge to flocculate and, as a result, to thicken, wherein this polyelectrolyte may be completed through the addition of one or more possible anti-frothing agents of a traditional kind, as contained in corresponding reservoirs (not shown), in the presence of whirling or turbulent flows that may give rise to foaming. Finally, aluminium polychloride is intended to cause sludge to precipitate.

Described below - again with reference to Figure 2 - will now be the settling means 56, which are substantially comprised of a large-capacity settling tank 101 for sludge and solid waste substances, and a liquid collecting tank 102 situated upstream of said settling tank 101 and communicating with the latter via a lower conduit 103 for causing the purified liquids contained in the collecting tank 102 - and introduced in said tank by means of a suction pump 104 connected to the previously described collecting tank 87 of the filtering means 55 - to overflow, i.e. skim over into said settling tank. In particular, the settling tank 101 contains appropriately shaped and sized lamellar conveying means 105, provided there to convey the purified liquids introduced in the same tank along appropriate internal flowpaths in view of causing the liquid portion, which remains in the upper layers of the liquid mass, or slurry, to be progressively separated from the solid waste portion, which settles and collects on the bottom of said settling tank 101, from which it is then removed and conveyed by a screw pump 106, situated under the bottom of the tank itself, towards a sequence of very finely meshed filtering bags 107, or towards duly provided filter-presses or centrifugal separators, in which said sludge and other solid waste substances still present in the solid waste portion remain inside said bags (or filter-presses or centrifugal separators) to be then suitably removed and disposed of, whereas the purified liquid - as separated from said solid waste portion - is conveyed through a lower conduit into a further collecting tank 108. This collecting tank 108 is in turn connected - via a conduit 109 and a pump 110 - to the centrifugal machine 36, so as to be able to convey the purified, disinfected and sanitized water again into the same centrifugal machine. As separated in the settling tank 101, the purified, disinfected and sanitized liquid is caused to overflow, i.e. skim over into a storage reservoir 111, in view of being subsequently conveyed - via a conduit 112 and a pump 113 - into the centrifugal machine 36, where it is re-used to wash further waste insulating materials loaded thereinto. The above-mentioned storage reservoir 111 is additionally supplied from a separate conduit 114 with clean fresh water flowing in from the external water supply line to thereby compensate for the unavoidable loss in purified and sanitized liquid occurring in this portion of the apparatus.

Referring now to Figure 3, which illustrates the third section of the inventive apparatus, which is specially provided to package - in bags or other suitable containers - the ground, cleaned, disinfected and sanitized waste materials stored in the silo 52, it can be noticed that this third section is substantially comprised of a bag carrying line 115, in which the bags being filled with said waste materials are placed, and a pallet storing and transporting line 116, provided separately from and parallel to the above-mentioned line 115, in which the bags containing the recovered waste materials are transferred and loaded onto a pallet at a time, to be subsequently loaded on trucks or transported in any other suitable manner to the place where these recovered waste materials are eventually re-used. In particular, the bag transport line 115 is substantially comprised of a loading hopper 117, into which the recovered, ready-for-use waste materials are introduced from the storage silo 52, as conveyed through a first and a second conduit 118 and 119, of which the first conduit 118 is intercepted by a rotary conveying screw 120, is connected with an end portion thereof to the upper portion of the same silo, and terminates with the other end portion thereof in a position lying above a vibratory belt 121 communicating with a further rotary conveying screw 122, which in turn communicates with the hopper 117 via a second conduit 119. In this way, the conveyance of the waste materials occurs through the rotary screws 120 and 122 and the vibratory belt 121, whereas the rotary screw 120 is in turn communicating also with a further conduit 123, the task of which is to selectively convey the waste materials and let them into further separate containers placed elsewhere in the plant, or to receive further ground, cleaned, disinfected and sanitized waste materials processed elsewhere, to the purpose of mixing them with the waste materials stored in the silo and introduce them in the loading hopper 117 serving the bag transport line 115.

This bag transport line 115 further includes a station 124 arranged under the loading hopper 117 for supporting and forming the bag material, a conveyor belt 125 for transporting the bag material filled with waste material, moving intermittently and unidirectionally in the direction A, a station 126 for squaring up the so filled bags, a station 127 for positioning the filled bags, and a motor-driven roller conveyor 128 for transporting the filled bags, moving again intermittently and unidirectionally in the same direction A. In particular, the station 124 provided to support and form the bag material is comprised of a motor-driven horizontal-axis revolving roller 129, arranged to lie across the line below the loading hopper 117, and on which there is wound the bag material. This unwinding roller 129 is first rotatably driven so as to cause the bag material to be laid in position under the loading hopper 117, then its rotation is stopped so as to allow a pre-set amount of the waste materials being introduced through the loading hopper 117 to be let onto the so arranged bag material. Upon the waste materials having been so loaded thereonto, the thus formed bag is welded along the side edges and the bottom thereof by means of a welding machine (not shown) situated close by said unwinding roller 129, and said filled bag is then deposited onto the conveyor belt 125 to be carried by the latter below a vertical piston 130, which is also situated in this support and bag formation station 124, so that the vertical displacement of this piston causes the recovered waste materials inside the bag to be compacted and evenly distributed therewithin. Thereafter, the bag itself is welded along the upper edge thereof and the conveyor belt 125 is again operated, thereby causing the filled and completed bag to move forwards into the squaring-up station 126 and be duly positioned there. This squaring-up station 126 is essentially comprised of a suitable press (not shown) which, as soon as the filled bag reaches its due position and stops there, is operated to confer the bag its desired shape. The so shaped bag is then carried further forwards by the conveyor belt 125, until it eventually reaches the positioning station 127, where it is stopped so as to enable this positioning station to position the bag in the desired manner on said conveyor belt 125, eg., standing in an upright position or laid down on the conveyor, while the subsequent forward movement of said conveyor belt carries the bag to be placed on the motor-driven roller conveyor 128, which in turn carries the bag further on up to the end thereof, where there is provided a movable trigger arm 131. As soon as the bag comes into contact with said trigger arm 131, thereby displacing it, this trigger arm causes the motor-driven roller conveyor 128 to stop moving, thereby placing the bag in a position coinciding with a platform elevator 132, which is displaceable vertically and crosswise and is situated between the bag transport line 115 and the pallet storage and transport line 116. In this manner, the bag is moved onto said platform elevator 132, wherein the same platform is then displaced transversally until it falls into alignment with the pallet storage and transport line 116: then it is displaced vertically to bring the bag at the desired height, thereby making it ready for loading onto a pallet. The pallet storage and transport line 116 is in turn comprised of a number of pallets 133 stacked upon each other, wherein new pallets are continuously added to this stack as existing ones are taken therefrom to be loaded with bags; it further comprises a first and a second motor-driven roller conveyor 134 and 135 aligned with and spaced from each other by a distance enabling the platform elevator 132 to be accommodated therebetween, wherein the first roller conveyor 134 is intended to move the from time to time upper pallet towards said space provided therebetween, in such a manner as to ensure that, when a platform elevator is loaded with a row of bags at a time, the same can be raised to the same height as such pallet, so as to be able to load the related bags onto said pallet, to be then brought back - through an inverted motion sequence - into the primitive position, where it is able to receive new bags. The second roller conveyor 135 is on the contrary intended to carry the pallet loaded with bags towards the next unloading station 136, in which there is arranged a semi-automatic coiler 137 provided with straps and adapted to wind said straps around the bags so as to tie them tightly together. The so packed bags are then removed from this unloading station by fork trucks and transported directly to the place of use of the materials, or loaded in trucks for transport to remote sites of use.

The present invention further relates to a process for recovering and washing insulating waste materials of the afore-described kinds, in view of obtaining ground insulating waste materials capable of being recycled for re-use in various applications, particularly, although not solely, in applications where they are used and perform as heat and sound insulation materials in residential buildings, eg. in floorings and similar structures of the same buildings. This process, which is carried out with the afore-described apparatus, comprises a step in which said waste materials are shredded into thin, minute strips and fibres in a first section of the inventive apparatus; a step in which metal magnetic materials that may be contained in the shredded waste material are separated therefrom and said waste materials are then washed in a washing arrangement and dried after washing, wherein said washing is carried out with the use of water mixed up with biocide agents, thereby obtaining shredded waste materials that are washed, disinfected and sanitized, whereas the soiled and polluting liquids that are separated therefrom during this washing step are conveyed into a second section of the inventive apparatus, in which they are separated, filtered and purified in successive steps, and further mixed up with said biocide agents, as well as anti-frothing and thickening agents, so as to be recovered for re-use in further washing sequences of new shredded waste materials, whereas separated solid substances (sand, mud, and the like) are disposed of separately; a step in which the so shredded and washed waste materials are ground into the desired particle size and stored in a silo; and a step in which the so treated and processed waste materials are conveyed from the storage silo to a third section of the inventive apparatus, in which they are filled in bags and loaded onto pallets for further transport to the places or sites of re-use thereof.

## Claims

1. Apparatus for recovering and washing waste insulating materials of various kind and nature, in view of obtaining ground insulating materials capable of being recycled for re-use in different applications, such as particularly, although not solely, in applications where they are used and perform as heat and sound insulation materials in residential buildings, in which said insulating waste materials comprise waste plastics, paper, cardboard, packaging materials, and the like, having heat and sound insulating properties, said apparatus being **characterized in that** it comprises a first apparatus section arranged so as to recover and appropriately treat such waste insulating materials, so as to obtain ground, cleaned, disinfected and sanitized waste materials, a second apparatus section arranged so as to separate the liquids contained in the waste insulating materials therefrom and clean, disinfect and sanitize the same liquids to remove dirt and contaminants therefrom, so as to be able to re-use these cleaned, disinfected and sanitized liquids in said first apparatus section, and a third apparatus section arranged so as to appropriately store the so obtained ground, cleaned, disinfected and sanitized waste insulating materials in view of them being subsequently recycled for re-use and transported to the sites of re-use, said first apparatus section comprising loading and shredding means (5), in which waste material, as previously collected separately, is introduced and shredded into thin, minute strips and fibres; separator means (6) adapted to separate metal magnetic materials that may be contained in the shredded waste material; washing means (7) adapted to wash the shredded waste material with the use of cleaned, disinfected and sanitized liquids, and separate the soiled and polluting liquids contained in the same waste material, so that said liquids can then be conveyed into said second section of the apparatus to be cleaned, disinfected and sanitized for re-use in said first apparatus section; washing and drying means (8) to handle the shredded and washed waste material in view of separating the shredded and washed waste material from foreign solid substances and particles contained therein, which are then disposed of, and drying said shredded and washed waste material; grinding means (9) to grind and triturate the shredded, washed and dried waste material, so as to obtain particles of said waste material having the desired size and shape; and storage means (10) to collect and temporarily hold all waste material being so treated, for it to be eventually transferred to the third section of the apparatus or other stations or sites; said second section of the apparatus being comprised of first and second collecting means (53, 54) that are arranged in a sequence relative to each other, filtering means (55) and settling means (56) provided to collect and purify the liquids by separating them from the dried solid waste substances (sand, mud, and the like) that are then disposed of, said first collecting means (53) comprising a collecting tank (57) communicating via first pump means (63) with said washing means (7) and associated to first conveyor means (58), and said second collecting means (54) comprising a loading hopper (71) communicating with said collecting tank (57) via second pump means (69) and associated to second conveyor means (76, 77); said filtering means (55) being associated to storage means (89) communicating with both said loading hopper (71), via additionally provided pump means, and third collecting means (85), provided to collect solid waste substances to be disposed of, and also with fourth collecting means (87) for collecting the liquids, said fourth collecting means (87) communicating with reservoir means (98, 99, 100) containing substances adapted to destroy bacterial florae, (biocide substances), cause the slurries to flocculate (polyelectrolyte), under possible addition of anti-frothing agents of a traditional kind, and to cause slurries to precipitate (aluminium polychloride): said apparatus being further **characterized in that** it comprises third conveyor means (90, 91) provided with said third collecting means (85) for collecting solid waste substances and associated with fifth collecting means (93) for collecting liquids, communicating via third pump means (94) with said fourth collecting means (87) provided to collect said liquids; said apparatus being further **characterized in that** said settling means (56) are adapted to contain the separated liquid portion and are associated to sixth collecting means (102) communicating with both said fourth collecting means (87), via fourth pump means (104), and fifth pump means (106) communicating with further filtering means (107) to separate and dispose of the solid waste portion, said settling means (56) communicating with seventh collecting means (111) to collect the liquid portion, and said further filtering means communicating with eighth collecting means (108) provided to collect the separated liquids, said seventh and eight collecting means (111,118) communicating in turn, via respective sixth and seventh pump means (113,110), with said washing means (7), so as to convey thereinto the so purified, disinfected and sanitized liquids for the re-use thereof; and said apparatus being further **characterized in that** said third apparatus section is comprised of means (115) for transporting, forming and packaging the bags filled with treated and processed waste material, as well as means (116) for stacking and transporting pallets provided to be loaded with the bags carried by said bag forming and transport means (115), these bag forming and transport means being comprised of loading means (117) communicating with said storage means (10) and adapted to selectively receive from the latter the treated and processed waste material; means (124) to support and form the bag material, in which on this bag material there is loaded said treated and processed waste material being introduced through said loading means (117), whereupon said bag material is welded together to form a respective bag; conveyor means (125) adapted to carry the filled bags in a sequence through squaring-up means (126) and positioning means (127) adapted to confer each bag the desired shape and to arrange each bag in the desired position on said conveyor means (125); further conveyor means (128) adapted to carry each filled bag up to a pre-established position; elevator means (132) adapted to move the filled bags from said pre-established position to said pallet stacking and transport means (116), wherein said pallet stacking and transport means (116) are comprised of pallet stacking means (133), in which pallets are stacked upon each other, first conveyor means (134) adapted to selectively carry each pallet into a position coinciding with said elevator means (132) to load the bags being placed and carried thereon onto a corresponding pallet (133) positioned there, and second conveyor means (135) adapted to carry each pallet loaded with bags towards unloading means (136), in which the bags are first tied tightly together and then picked up by means of transport vehicles to be moved to the places or sites where the treated and processed waste materials are ultimately re-used.

2. Apparatus according to claim 1, **characterized in that** said loading and shredding means (5) are comprised of a metal casing (11) delimiting at least an internal shredding chamber (12) communicating with an upper loading hopper (13), into which the previously collected waste material is introduced, said waste material being first placed on the lower terminal zone of continuously moving inclined conveyor means (14) to be thereby conveyed up to the upper terminal zone of said conveyor means (14), which is situated above the hopper (13) so as to allow said waste material to fall by gravity into said internal shredding chamber (12), this internal shredding chamber (12) housing at least a horizontal-axis revolving cylinder (16), which is rotatably driven in a continuous manner and is provided with cutting means (cutting blades 18) to thereby cause the waste material being let into said internal chamber to be finely shredded, whereupon the shredded waste material falls by gravity, by passing through a lower outlet opening (19) in said internal chamber (12), onto the lower terminal zone of a further continuously moving, inclined conveyor means (20) provided therebelow and located close by said loading and shredding means (5).

3. Apparatus according to claim 2, **characterized in that** said separator means (6) are comprised of continuously moving, magnetizable conveyor means (21) which are arranged in a position situated between the lower and upper terminal zones of said further conveyor means (20), are made of a magnetizable material and arranged to run in a parallel and transverse direction relative to said further conveyor means (20), said magnetizable conveyor means (21) having a length that is greater than the width of said further conveyor means (20) and being slightly raised relative to the latter, said magnetizable conveyor means (21) being further comprised of a cylinder (22) of a permanent magnetic material, which is arranged in a position lying between the upper planar section (23) and the lower planar section (24) of said magnetizable conveyor means (21), and is adapted to enable a magnetic field to be only generated through said lower section (24) with such an intensity and strength as to be able to attract the magnetic metal material contained in the shredded waste material being conveyed on said further conveyor means (20), thereby causing said magnetic metal material to move away and separate from said shredded waste material, wherein the so attracted magnetic metal material will then come off said lower section of said conveyor means in the zone of said magnetizable conveyor means (21) where the movement direction thereof is reversed, and where there is no magnetic field, to eventually fall into and be collected in appropriate bins provided therebelow.

4. Apparatus according to claim 3, **characterized in that** said washing means (7) are comprised of a water-operated centrifugal machine (25) having an inclined axis of rotation and containing an internal perforated rotating drum (26) that is rotatably driven at a spinning speed of approx. 1800 rpm and is provided with side lids (27, 28) enabling access to be gained thereinto, in which there is loaded the waste material coming from said further conveyor means (20), as let thereinto through a loading hopper (29) attached to the upper portion of the machine and arranged in a position coinciding with and slightly below said upper terminal zone of said further conveyor means (20), said centrifugal machine (25) being connected to water supply conduits (30), through which wash water, as duly mixed with appropriate biocide substances capable of destroying bacterial florae existing in the waste material, is caused to continuously circulate so as to bring about an effective washing, disinfecting and sanitizing action on said waste materials, said centrifugal machine (25) being further provided with a first and a second lower outlet openings (32, 33) intended to let out the waste material, as duly washed, disinfected and sanitized, and the soiled and polluting washing liquids separated from the mass of waste materials, respectively, these liquids being subsequently purified in said second apparatus section for recovery and re-use.

5. Apparatus according to claim 4, **characterized in that** said biocide substances preferably comprise quaternary ammonium and/or glutaraldehyde, or other suitable substances that are normally used to such purposes.

6. Apparatus according to claim 4, **characterized in that** said washing and drying means (8) are comprised of a further centrifugal machine (36) of the same kind as said centrifugal machine (25), which is again provided with an internal perforated rotating drum communicating with a loading hopper (35) situated thereabove and above which there terminates the upper terminal zone of further inclined conveyor means (34), the lower terminal zone of which lies below said first outlet opening (32), in a position coinciding therewith, so as to transfer onto said further conveyor means (34) the waste material having been so washed, disinfected and sanitized in said centrifugal machine (25), and to then transfer said washed, disinfected and sanitized waste material into said drum of said further centrifugal machine (36), in which said drum being driven to rotate at a high spinning speed, preferably of approx. 1800 rpm, causes on the one side said washed, disinfected and sanitized waste material to be spin-extracted, and therefore dried, whereupon said material is conveyed through a first lower outlet opening for subsequent transfer onto the lower terminal zone of subsequent continuously moving, inclined conveyor means (37) situated therebelow, and, on the other side, the foreign solid substances contained in said waste materials to be separated therefrom and conveyed through a second lower outlet opening for being discharged outside.

7. Apparatus according to claim 6, **characterized in that** said grinding means (9) comprise a grinding mill (38) formed of a large-size metal casing (39) delimiting at least an internal grinding chamber (40) that communicates with both an upper loading hopper (41) and a lower collecting chamber (42), wherein said hopper (41) is situated in a position below the upper terminal zone of said subsequent conveyor means (37), so that washed, disinfected and sanitized waste material being carried by said conveyor means is enabled to fall into said hopper (41) and then enter the grinding chamber (40) located therebelow, said grinding chamber (40) accommodating at least a horizontal-axis rotor (43) that is continuously driven rotatably and carries cutting means (cutting blades 45) to grind said waste material into granular particles of a given maximum particle size, and said collecting chamber (42) being provided inside an unloading hopper (46), in which there are accommodated continuously revolving conveying means (rotary screw feeder 47), situated in a position below said rotor (43), and being further provided with a bottom outlet opening (48) for the ground waste material to be able to exit therethrough, said outlet opening being connected, through conduits (50, 51) and via aspirator means (49), with the upper part of said storage means (10) to the purpose of aspirating the ground waste material collecting into the collecting chamber (42) and conveying it into said storage means (10).

8. Apparatus according to claim 7, **characterized in that** said storage means (10) cpmprise an upright silo (52) having a large storage capacity.

9. Apparatus according to claim 4, **characterized in that** said horizontally extending collecting tank (57) of said first collecting means (53) is subdivided by a vertical partition wall (59) into a first tank portion (60) and a second tank portion (61), wherein said first tank portion (60) is provided with a smaller capacity than said second tank portion (61) and communicates, via a conduit (62) and said first pump means (63), with said second lower outlet opening (33) of said centrifugal machine (25), in such a manner as to enable the soiled and polluting liquids flowing from said centrifugal machine (25) to be collected into said first tank portion (60), and submerged in the soiled and polluting liquids collected in the first tank portion (60) there is the lower end portion of a hollow conduit (64) and an internal rotary screw feeder (65) forming said first conveyor means (58), so that the continuous rotation of said rotary screw feeder (65) brings about a suction effect to draw in the soiled and polluting liquids from said first tank portion (60) and carry them, via the inner chamber of said hollow conduit (64), up to the upper end portion of said hollow conduit, so that from said liquids there are separated the solid waste substances that are then conveyed through an associated outlet conduit (66) and discharged into a collecting bin (68) provided therebelow for subsequent disposal, whereas the remaining liquid substances are on the contrary conveyed through a further associated further conduit (67) into said second tank portion (61), in which said second tank portion (61) is connected to a conduit (70) provided with said second pump means (69).

10. Apparatus according to claim 9, **characterized in that** said loading hopper (71) of said second collecting means (54) is made in a roughly trapezoidal shape, is closed by an upper wall (72) provided with a conduit portion (73) that connects to said conduit (70), is delimited downwards by a perforated inclined bottom (74) and a hollow inclined conduit (76) attached on the outside against said perforated inclined bottom (74) all along the length thereof, and protruding beyond said bottom, and accommodating in its interior a rotary screw feeder (77), or the like, thereby forming said second conveying means, said hollow conduit (76) being further perforated along the region thereof that is in contact with said bottom (74), and being provided at the upper end portion thereof with an unloading conduit (79) communicating with the internal cavity thereof, so that the soiled and polluting liquid substances contained in said second tank portion (61) are drawn in by the suction of said second pump means (69) to collect into the collecting chamber of said loading hopper (71), where the heavier solid particles in said substances (eg., sand, mud, and the like) separate from the liquid portion of the same substances and settle by gravity onto said bottom (74), from which they are then able to move into the internal cavity of said inclined conduit (76) to be conveyed by the rotating movement of said rotary screw feeder (77) up to the upper end portion of the same conduit, from which they then pass into and through said unloading conduit (79) to eventually fall into a collecting vessel located therebelow for due disposal, whereas the liquid portion of said soiled and polluting liquid substances remains in turn contained in said collecting chamber of said hopper (71), which is connected with said filtering means (55) via a further conduit (81).

11. Apparatus according to claim 10, **characterized in that** said filtering means (55) are comprised of a perforated horizontal-axis rotating cylinder (82) provided with a fine-mesh filtering surface and housed in a support structure (83) that is closed below and open on top, said cylinder (82) being continuously driven into rotation and delimitating an inner chamber adapted to contain the liquid portion to be further purified, so that the solid particles that may be still present in said liquid portion are separated therefrom to remain in said inner chamber of said cylinder, from which they are then unloaded outside through a first unloading conduit (84) communicating with said inner chamber, and attached in the lower portion of said support structure (83), to ultimately fall into said third collecting means (collecting bin 85) provided therebelow, in a separate position relative to said first unloading conduit (84), whereas the filtered liquids passing through the filtering meshes of said cylinder (82) are let outside through a second outlet conduit (86) that is in turn attached in the lower portion of said support structure (83), to ultimately fall into said fourth collecting means (large-capacity collecting tank 87) provided in a position below said second outlet conduit (86), wherein the inner chamber of said rotating cylinder (82) communicates with said storage means (separate large-capacity tank 89) acting as a temporary storage buffer, which are situated upstream of the same rotating cylinder and connect to the conduit (81) extending from the collecting chamber of said loading hopper (71) under interposition of said further pump means that are adapted to draw in the liquid portion contained in said collecting chamber of the hopper and convey it into said storage means (89), from which it is then introduced into said inner chamber of said rotating cylinder (82) via appropriate valve means.

12. Apparatus according to claim 11, **characterized in that** said rotating cylinder (82) is provided internally with separator or scraping means (internal screw-shaped blade) that scrapes off the filtering surface the solid waste particles collecting in the inner chamber of the same cylinder, which are then let out through said first unloading conduit (84).

13. Apparatus according to claim 12, **characterized in that** said filtering means (55) are additionally associated to a further inclined hollow conduit (90), which is provided downstream of said first unloading conduit (84) and accommodates a rotary screw feeder (91) therewithin, said inclined conduit (90) sustaining at the lower end portion thereof said third collecting means (85), into which the solid waste particles falling from said first unloading conduit (84) are introduced to then enter the inner cavity of said inclined conduit (90) and be moved further on by the action of said rotating screw feeder (91) towards the upper end portion of the same conduit, whereby these solid waste particles are separated, to be then unloaded downwards into a collecting bin (92) provided therebelow for final disposal, whereas the liquids, as separated from said solid waste particles, are conveyed into said fifth collecting means (suitably sized collecting vessel 93), from which they are then drawn in and conveyed by said third pump means (94) towards said fourth collecting means (87), where they mix up with the liquids let out through said second outlet conduit (86).

14. Apparatus according to claim 13, **characterized in that** said settling means (56) are substantially comprised of a settling tank (101) for sludge and solid waste substances, which communicates with said sixth liquid collecting means (102) situated upstream, and contains appropriately shaped and sized lamellar conveying means (105) provided to convey the purified liquids introduced in the same tank along appropriate internal flowpaths in view of causing the liquid portion, which remains in the upper layers of the liquid mass, or slurry, and is introduced in said seventh collecting means (111), to be progressively separated from the solid waste portion, which settles and collects on the bottom of said settling tank (101), from which it is then removed and conveyed by said fifth pump means (screw pump 106) towards said further filtering means (107), in which said sludge and other solid waste substances still present in the solid waste portion remain inside said further filtering means (107) to be then suitably removed and disposed of, whereas the purified liquid, as separated from said solid waste portion, is conveyed into said eighth collecting means (108) that are in turn connected, via a conduit (109) and said seventh pump means (110), to said sixth collecting means (102), so as to be able to convey the liquid from said eighth collecting means (108) again into said sixth collecting means (102) and, from the latter, through said settling means (56), wherein this cycle is repeated until the liquid is fully separated from all solid waste particles and substances and, as a result, can be considered as being purified, i.e. cleaned, disinfected and sanitized.

15. Apparatus according to claim 14, **characterized in that** said further filtering means are comprised of a sequence of very finely meshed filtering bags (107), or filter-presses or centrifugal separators.

16. Apparatus according to claim 8, **characterized in that** said loading means are comprised of loading hopper (117), into which the recovered, ready-for-use waste materials are introduced from said storage silo (52), as conveyed through a first and a second conduit (118, 119), of which said first conduit (118) is intercepted by a rotary conveying screw (120), or the like, is connected with an end portion thereof to the upper portion of the same silo, and terminates with the other end portion thereof in a position lying above a vibratory belt (121), or the like, communicating with a further rotary conveying screw (122), or the like, which in turn communicates with said hopper (117) via said second conduit (119), wherein said rotary screw (120) is in turn communicating with a further conduit (123) to selectively convey ground, cleaned, disinfected and sanitized waste materials from said rotary conveying screw (120) towards the outside or from the outside towards said rotary conveying screw (120).

17. Apparatus according to claim 16, **characterized in that** said bag material supporting and forming means (124) are comprised of a motor-driven horizontal-axis revolving roller (129), arranged to lie transversally below said loading hopper (117), and on which there is wound the bag material, said roller (129) being first driven rotatably so as to cause the bag material to be laid in position under said loading hopper (117), being then stopped so as to allow a pre-set amount of the waste materials being introduced in the same loading hopper (117) to be let onto the so arranged bag material, and being thereupon welded along the side edges and the bottom thereof by means of appropriately provided welding means situated close by said revolving roller (129), and said so formed and filled bag is then deposited onto said conveying means (conveyor belt 125) to be carried by the latter into a position below compacting means (vertical piston 130) to cause the recovered waste materials inside the bag to be compacted and evenly distributed therewithin, wherein the so compacted bag is welded along the upper edge thereof and is conveyed by said conveyor means (125) to move forwards into said squaring-up means (126).

18. Apparatus according to claim 17, **characterized in that** said squaring-up means (126) are comprised of a press which, as soon as the filled bag reaches this position and is caused to temporarily stop there, is operated to confer the bag the desired shape thereof, wherein the so squared-up bag is then carried further forwards to reach said positioning means (127), where it is stopped so as to enable said positioning means to position the bag in the desired manner on said conveyor means (125), such as in an upright position or laid down on the conveyor, while the bag itself is carried further forwards onto said further conveyor means (motor-driven roller conveyor 128).

19. Apparatus according to claim 18, **characterized in that** said further conveyor means (128) are associated with triggering means (movable trigger arm 131) that are actuated by each bag coming into contact therewith to thereby causing said further conveyor means (128) to stop moving, so as to place the same bag in a position coinciding with said elevator means (132).

20. Apparatus according to claim 19, **characterized in that** said elevator means are comprised of a platform elevator (132), which is displaceable vertically and crosswise and is situated between said bag transport and packaging means (115) and said pallet stacking and transport means (116), wherein said platform is adapted to displace from a position coinciding with said further conveyor means (128), where the bags are loaded onto it, to a position coinciding with said pallet stacking and transport means (116), where the bags are unloaded onto the respective pallets (133), and vice-versa.

21. Apparatus according to claim 20, **characterized in that** said pallet stacking and transport means (116) are formed of a number of pallets (133) stacked upon each other, wherein new pallets are continuously added to this stack as existing ones are taken therefrom to be loaded with bags.

22. Apparatus according to claim 21, **characterized in that** said first and second conveyor means (134, 135) are formed of a first and second motor-driven roller conveyors, respectively, aligned with and spaced from each other by a distance enabling said platform elevator (132) to be accommodated therebetween, wherein said first roller conveyor (134) is intended to move the from time to time upper pallet towards said space provided therebetween, for enabling a row of bags at a time to be loaded thereonto, and wherein said second roller conveyor (135) is intended to carry each such pallet loaded with bags towards said unloading means (136),

23. Apparatus according to claim 22, **characterized in that** said unloading means (136) are provided with a semi-automatic winder (137) provided with straps, or the like, and adapted to wind said straps, or the like, around the bags so as to tie them tightly together.

24. Process for recovering and washing insulating waste materials in an apparatus according to the preceding claim s 1 to 23, **characterized in that** it comprises a step in which said waste materials are shredded into thin, minute strips and fibres in said first section of the apparatus; a step in which metal magnetic materials that may be contained in the shredded waste material are separated therefrom and said waste materials are then washed in said washing means (7) and dried after washing, wherein said washing is carried out with the use of water mixed up with biocide agents, thereby obtaining shredded waste materials that are washed, disinfected and sanitized, whereas the soiled and polluting liquids that are separated therefrom during this washing step are conveyed into said second section of the apparatus, in which they are separated, filtered and purified in successive steps, and further mixed up with said biocide agents, as well as anti-frothing and thickening agents, so as to be recovered for re-use in further washing sequences of new shredded waste materials, whereas separated solid substances (sand, mud, and the like) are disposed of separately; a step in which the so shredded and washed waste materials are ground into the desired particle size and stored in said silo (52); and a step in which the so treated and processed waste materials are conveyed from said storage silo (52) to said third section of the apparatus, in which they are filled in bags and loaded onto pallets for further transport to the places or sites of re-use thereof.
